Europäisches Patentamt

European Patent Office

Office européen des brevets

(11) Veröffentlichungsnummer : **0 029 881**
**B1**

# EUROPÄISCHE PATENTSCHRIFT

(45) Veröffentlichungstag der Patentschrift :
**16.11.83**

(21) Anmeldenummer : **80105449.5**

(22) Anmeldetag : **12.09.80**

(51) Int. Cl.³ : **G 01 B 11/24**, G 01 B 11/26,
F 41 C 21/20

(54) **Durchzugkörper zum Messen der Biegung der Innenwand eines Rohres.**

(30) Priorität : **09.11.79 DE 2945290**

(43) Veröffentlichungstag der Anmeldung :
**10.06.81 Patentblatt 81/23**

(45) Bekanntmachung des Hinweises auf die Patenterteilung : **16.11.83 Patentblatt 83/46**

(84) Benannte Vertragsstaaten :
**CH DE FR GB IT LI SE**

(56) Entgegenhaltungen :
**DE A 2 633 965
DE A 2 856 158
DE C 474 157
US A 2 718 707
US A 2 864 280
US A 4 026 371**

(73) Patentinhaber : **Rheinmetall GmbH
Ulmenstrasse 125 Postfach 6609
D-4000 Düsseldorf (DE)**

(72) Erfinder : **Trost, Elmar
Kaiserswerther Strasse 104a
D-4030 Ratingen (DE)**
Erfinder : **Reusch, Rudolf
Peter-Richarz-Strasse 4
D-4000 Düsseldorf (DE)**

(74) Vertreter : **Behrens, Ralf Holger, Dipl.-Phys.
Ulmenstrasse 125
D-4000 Düsseldorf (DE)**

EP 0 029 881 B1

Jouve, 18, rue St-Denis, 75001 Paris, France

Durchzugkörper zum Messen der Biegung der Innenwand eines Rohres

Die Erfindung betrifft einen Durchzugkörper zum Messen der Biegung der Innenwand eines Rohres mit Hilfe einer Lichtquelle und eines elektrooptischen Detektors, bestehend aus einem im Inneren des Rohres zentrisch gelagerten und in dessen Längsrichtung verschiebbaren, mit einem Meßmittel ausgerüsteten Körpergehäuse, das mit Paßringen an der Innenwand des Rohres axial gleitbar gelagert ist.

Bei solchen bekannten Durchzugkörpern wird der Innenraum des z. B. zylindrischen Körpergehäuses von einem Kollimator eingenommen, der an beiden Enden mit je einem Fadenkreuz ausgerüstet ist. Der Kollimator arbeitet mit einem außerhalb des zu messenden Rohres angeordneten Fluchtfernrohr zusammen, dessen ebenfalls mit einem Fadenkreuz ausgerüstete Optik vor und nach jedem schrittweisen Vorschub des zylindrischen Gehäuses mit den Fadenkreuzen des Kollimators zur Deckung gebracht wird. Nach Vorschieben des Gehäuses und damit des Kollimators können die Fadenkreuze des Kollimators Abweichungen von der Fluchtlinie aufweisen. Aus deren Größe läßt sich dann ein Meßwert an dem mit Skalen versehenen Fadenkreuz des Fluchtfernrohres ablesen.

Mit derartigen, z. B. aus der DE-A-23 52 240 bekannten Durchzugkörpern ist nur ein umständliches Feststellen einzelner Werte nacheinander möglich, das Rohr muß vor der Messung ausgerichtet werden, und es treten erhebliche Meßfehler auf, da das Gehäuse beim Durchzug durch das Rohr die Tendenz zum Drehen hat. Bekannte Meßverfahren sind somit wegen hohen Zeitaufwandes und geringer Aussagekraft in der Praxis nicht einsetzbar.

Bei Lasergeradheitsmeßverfahren wird ein Laserstrahl als Referenzgerade genommen und die Abweichung relativ zum Laserstrahl mit Hilfe eines Strahllagedetektors, z. B. einer Photodiode, bestimmt. Aufgrund der von Detektor ausgehenden Signale liefert eine Auswerteinheit zwei Meßwerte, die die Abweichungen in den zum Strahl rechtwinkligen Richtungen angeben. Die Ermittlung der Geradheitsfehler kann dann in einem Rechner erfolgen. Das Meßverfahren und die Auslegung der zugehörigen Komponenten ist durch den Forschungsbericht Nr. 2719 des Landes Nordrhein-Westfalen, Verfasser T. Pfeifer und C. A. Schneider, erschienen im Westdeutschen Verlag Opladen 1978 bekannt.

Bekannte Durchzugkörper sind mangels eines Strahllagedetektors als Meßmittel und mangels der Möglichkeit, des Meßmittel beim Vorschub in der waagerechten und senkrechten Ebene parallel zu halten, für die neuen Meßverfahren nicht geeignet.

Aus der US-A-2 864 280 ist ein Durchzugkörper in einem Rohr entsprechend dem Oberbegriff des Anspruchs 1 als bekannt zu entnehmen. Dort ist das Meßmittel ein dem Durchzugkörper zugeordnetes Prisma, das von außen von einem Lichtstrahl getroffen wird. Außerdem befindet sich außerhalb des Rohres ein elektrooptischer Detektor.

Die US-A-4 026 371 beschreibt eine Vorrichtung um Leitungsrohre waagerecht in der Erde zu verlegen. Hier trifft ein Laserstrahl von außerhalb des Rohres auf mit einem Fadenkreuz o. dgl. versehene durchsichtige Platten am anderen Rohrende in einem dort fest eingebauten Körper.

Die US-A-2 718 701 beschreibt eine Einrichtung, um den Neigungswinkel senkrecht in die Erde eingebauter Rohre festzustellen. Hierbei findet ein Pendel mit einem daran exzentrisch befestigten Gewicht Anwendung, das sich der Neigung des Rohres an die Gehäusewand anlegt.

Alle drei US-Patentschriften offenbaren nur Einzelmerkmale, geben aber keinen Hinweis auf die der vorliegenden Anmeldung zugrundeliegenden Aufgabe.

Aufgabe der Erfindung ist es, einen Durchzugkörper zu schaffen, der es erlaubt, aus dem Maschinenbau bekannte Geradheitsmeßsysteme, insbesondere unter Einsatz der neuen Lasertechnologie anzuwenden und den spezifischen Anforderungen einer Rohrvermessung anzupassen. Es wird ein Durchzugskörper geschaffen, der in der Lage ist, einen Strahllagedetektor aufzunehmen, und bei dem beim Verschieben des Durchzugkörpers im zu messenden Rohr die elektrischen Achsen des Strahllagedetektors mit der waagerechten und senkrechten Meßebene selbsttätig parallel gehalten werden, um Meßfehler zu vermeiden. Er soll leicht zu handhaben sein und einen geringen Durchmesser aufweisen, so daß er in Rohren geringen Durchmessers einsetzbar ist. Er soll leicht an unterschiedliche Durchmesser der zu vermessenden Rohre anpaßbar sein, er soll das Messen bis zum Rohrende hin möglich machen und er soll betriebssicher sein, das heißt, es soll neben dem Parallelhalten des Strahllagedetektors auch ein Abdrehen der Anschlußleitungen verhindert sein. Er soll große Meßbereiche ermöglichen und für das Meßverfahren eine automatisierte Datenerfassung und Auswertung mit Hilfe eines Rechners ermöglichen.

Dies wird bei einer Einrichtung nach dem Oberbegriff des Anspruchs 1 durch folgende Merkmale erreicht :

a) die Paßringe sind auswechselbar ;

b) ein Aufnahmegehäuse für das Meßmittel ist ein abgesetztes zylindrisches Rohr, das in einem abgesetzten engeren Teil über außen an ihm angreifende, mit Abstand voneinander angeordnete Kugellager im Körpergehäuse drehbar gelagert ist, und das in einem weiteren Teil als Meßmittel den elektrooptischen Detektor als Strahllagedetektor aufnimmt ;

c) der Strahllagedetektor ist im weiteren Teil des Aufnahmegehäuses so gelagert, daß seine die Meßebene bildende aktive Fläche in der durch die Mitte des Paßrings an der von einem als Lichtquelle eingesetzten Laser abgewandten Seite des Körpergehäuses gehenden Ebene liegt;

d) mit dem engeren Teil des Aufnahmegehäuses ist exzentrisch ein Gewichtsstück verbunden, dessen Schwenkbereich durch Anschlagstücke an der Innenwand des Körpergehäuses begrenzt ist.

Durch das Gewichtsstück wird erreicht, daß die Achsen des Achsenkreuzes des Detektors stets lotrecht bzw. waagerecht und damit parallel zur Meßebene bleiben, weil sich der Detektor stets in die gleiche Lage einpendelt, auch wenn sich das Körpergehäuse beim Vorschub im Rohr dreht. Dieses Einpendeln erfolgt in kürzester Zeit von 1 bis 4s, so daß die Messungen kurz aufeinanderfolgend vorgenommen werden können.

Unter Verwendung von im Handel verfügbaren kleinsten Kugellagern läßt sich ein Durchzugkörper bauen, dessen Durchmesser unter 9 cm liegt. Für die Aufnahme von Meßwerten ist nur eine aktive Detektorfläche von 3 cm Durchmesser erforderlich. Der Laserstrahl ist etwa 1 cm stark und beim Messen treten Abweichungen nach oben oder unten oder seitlich bis zu je einem cm auf.

Die Unteransprüche nennen Ausführungsarten der Erfindung:

Ein einfacher Einbau des Aufnahmegehäuses in das Körpergehäuse wird durch Halterung der über ein Distanzrohr auf Abstand voneinander gehaltenen Kugellager einerseits durch einen mit Außengewinde versehenen Befestigungsring an der Innenwand des Körpergehäuses und andererseits durch eine mit Innengewinde versehene Ringmutter an der Außenwand des Aufnahmegehäuses erreicht.

Um den Detektor isoliert von Metallteilen zu lagern, erfolgt seine Halterung in einem in das Aufnahmegehäuse einschiebbaren Innenrohr über eine Isolierscheibe und einen Isolierring.

Eine raumsparende Unterbringung des Gewichtsstückes ergibt sich durch seine Anordnung zwischen den Kugellagern. Um die Kugellager vor Staub zu schützen, ist ein den Laserstrahl durchlassendes Schutzfilter, z. B. aus Glas, als Abschluß der zum Laserstrahl hin gewandten Stirnwand des Körpergehäuses vorgesehen.

Für die Verbindung des Detektors mit der Auswerteinheit ist eine Öffnung für die Anschlußleitungen des Detektors und für das Verschieben des Durchzugkörpers im zu messenden Rohr eine weitere Öffnung für den Anschluß einer Positionierstange in der vom Laserstrahl abgewandten Stirnwand des Körpergehäuses vorgesehen. Da für den Meßvorgang eine Schwenkung des Detektors höchstens bis zu einem Winkel von 40° nach beiden Seiten erforderlich ist, ist der Schwenkbereich des Gewichtsstücks durch Anschlagstücke an der Innenwand des Körpergehäuses entsprechend begrenzt. Dadurch wird ein Abdrehen der Anschlußleitungen zum Detektor vermieden.

Der erfindungsgemäße Durchzugkörper wird nachstehend anhand der Beschreibung von Ausführungsformen, unter Bezugnahme auf die Zeichnung erläutert. Die Zeichnung zeigt in

Figur 1 schematisch den Meßaufbau mit einem Durchzugkörper in einem Rohr, in

Figur 2 in vergrößertem Maßstab einen Schnitt durch die Meßebene des Detektors und in

Figur 3 in noch größerem Maßstab einen Längsschnitt durch den Durchzugkörper.

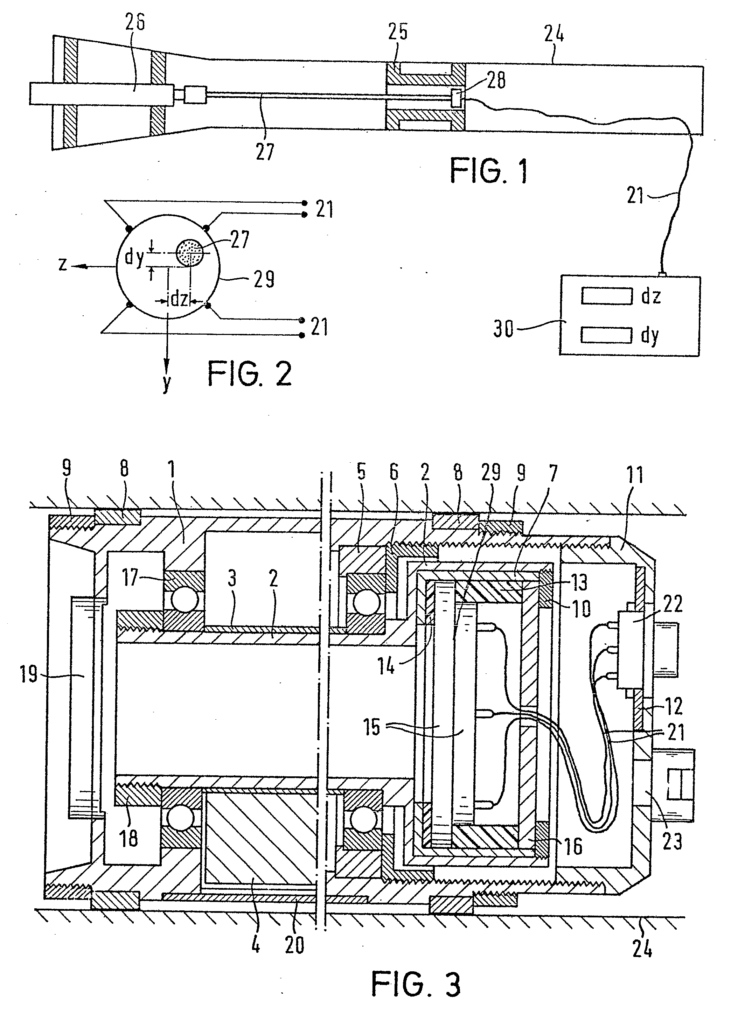

Nach Fig. 1 befindet sich in einem Rohr, z. B. einem Geschützrohr, in dem die sich aus Fertigungsfehlern (Krümmung) und aus dem Durchhang ergebende Biegung des Rohres zu messen ist, ein Durchzugkörper 25 mit Strahllagedetektor 28, der vom Laserstrahl 27 des Lasers 26 beaufschlagt ist. Der Laser ist zentrisch in ein an das Rohr anschließenden konischen Teil so eingebaut, daß der Laserstrahl genau auf der Rohrachse liegt. Im Falle eines Geschützrohres kann das konische Teil der Laderaum des Geschützes sein, so daß die Messungen ohne Ausbau des Rohres aus dem Geschütz vorgenommen werden können. Von dem Strahllagedetektor 28 führen Anschlußleitungen 21 zu einer Auswerteinheit 30, in der die sich bei Durchziehen des Durchzugkörpers 25 durch das Rohr 24 ergebenden Abweichungen in lotrechter und waagerechter Richtung dy und dz angezeigt werden können, aus denen dann mit Hilfe eines Meßprogramms im Rechner die Biegung errechnet wird.

Figur 2 zeigt, wie bei einer bestimmten Meßstellung der Laserstrahl 27 aus der Mitte des Koordinatenkreuzes yz um die Abstände dy und dz auf der Meßebene 29 ausgewichen ist.

Figur 3 zeigt in dem zu messenden Rohr 24, über Paßringe als Kaliberringe 8 geführt, das Körpergehäuse 1 des Durchzugkörpers. Die Paßringe werden durch mit Innengewinde versehene Halteringe 9 auf dem Körpergehäuse gehalten und sind dadurch leicht auswechselbar. In dem Körpergehäuse 1 ist über die Kugellager 17 das Aufnahmegehäuse 2 für den Detektor 15 drehbar gelagert. Die Kugellager 17 sind durch das Distanzrohr 3 auf Abstand gehalten. Das linke Kugellager ist an seiner freien Seite durch eine Ringmutter 18 auf dem Aufnahmegehäuse 2 gehalten. Das rechte Kugellager ist über einen Zwischenring 5 mit dem Körpergehäuse 1 verbunden und wird durch den mit Außengewinde versehenen Befestigungsring 6 am Körpergehäuse 1 in seiner Lage gehalten. Zwischen den Kugellagern 17 ist unten in Fig. 3 das Gewichtsstück 4 zu sehen, dessen Unterbringungsraum durch einen Deckel 20 im Körpergehäuse 1 zugängig ist. Der Strahllagedetektor 15 ist nach rechts abgesetzt und in einem aus Innenrohr 7 mit Gehäusedeckel 16 gebildeten Gehäuse durch die Isolierscheibe 14 und den Isolierring 13 außer Berührung mit den Wänden diese Gehäuse 7, 16 gehalten wird. Dieses Gehäuse 7, 16 ist in den weiteren Teil des Aufnahmegehäuses 2 eingeschoben und wird darin durch die Ringschraube 10 gehalten. Die Meßebene 29 liegt auf der Höhe der Mitte des rechten Kaliberringes 8. An der rechten Seite des Detektors 15 befinden sich Anschlußleitungen 21, die durch die Öffnung 22 zur Auswerteinheit geführt werden können. In der die rechte Stirnwand des Körpergehäuses bildenden Kappe 11 befindet sich weiterhin eine Öffnung 23 zum Befestigen einer Positionierstange zum Durchschieben des Durchzugkörpers durch das zu messende Rohr. Außerdem kann mit einer Scheibe 12 an der Kappe 11 ggf. eine Steckbuchse für eine Steckverbindung der Anschlußleitungen 21 befestigt sein. Vor der Öffnung der linken Stirnwand des Körpergehäuses 1 ist ein den Laserstrahl durchlassendes Schutzfilter 19 angebracht.

### Bezugszeichenliste

1 Körpergehäuse
2 Aufnahmegehäuse
3 Distanzrohr
4 Gewichtstück
5 Zwischenring
6 Befestigungsring
7 Innenrohr
8 Kaliberring
9 Haltering
10 Ringschraube
11 Kappe
12 Scheibe
13 Isolierring
14 Isolierscheibe
15 Strahllagedetektor als Photodiode
16 Gehäusedeckel
17 Kugellager
18 Ringmutter
19 Schutzfilter
20 Deckel
21 Anschlußleitung
22 Öffnung für Anschlußleitung
23 Öffnung für Positionierstange
24 Zu messendes Rohr
25 Durchzugkörper
26 Laser
27 Laserstrahl
28 Strahllagedetektor (schematisch)
29 Meßebene des Detektors
30 Auswerteinheit

### Ansprüche

1. Durchzugkörper, der aus einem im Inneren eines Rohres zentrisch gelagerten und in dessen Längsrichtung verschiebbaren, mit einem Meßmittel ausgerüsteten Körpergehäuse besteht das mit Paßringen an der Innenwand des Rohrs axial gleitbar gelagert ist, zum Messen der Biegung der Innenwand des Rohres mit Hilfe einer Lichtquelle und eines elektrooptischen Detektors, gekennzeichnet durch die Merkmale :

a) die Paßringe (8) sind auswechselbar ;

b) ein Aufnahmegehäuse (2) für das Meßmittel ist ein abgesetztes zylindrisches Rohr, das in einem abgesetzten engeren Teil über außen an ihm angreifende, mit Abstand voneinander angeordnete Kugellager (17) im Körpergehäuse (1) drehbar gelagert ist, und das in einem weiteren Teil als Meßmittel den elektrooptischen Detektor als Strahllagedetektor (15) aufnimmt ;

c) der Strahllagedetektor (15) ist im weiteren Teil des Aufnahmegehäuses (2) so gelagert, daß seine die Meßebene bildende aktive Fläche in der durch die Mitte des Paßrings (8) an der von einem als Lichtquelle eingesetzten Laser abgewandten Seite des Körpergehäuses (1) gehenden Ebene liegt ;

d) mit dem engeren Teil des Aufnahmegehäuses (2) ist exzentrisch ein Gewichtsstück (4) verbunden, dessen Schwenkbereich durch Anschlagstücke an der Innenwand des Körpergehäuses (1) begrenzt ist.

2. Körper nach Anspruch 1, gekennzeichnet durch Halterung der über ein Distanzrohr (3) auf Abstand gehaltenen Kugellager (17) einerseits durch einen mit Außengewinde versehenen Befestigungsring (6) an der Innenwand des Körpergehäuses (1) und andererseits durch eine mit Innengewinde versehene Ringmutter (18) an der Außenwand des Aufnahmegehäuses (2).

3. Körper nach Anspruch 1 oder 2, gekennzeichnet durch Halterung des Strahllagedetektors (15) in einem in das Aufnahmegehäuse (2) einschiebbaren Innenrohr (7) über eine Isolierscheibe (14) und einen Isolierring (13).

4. Körper nach einem der Ansprüche 1 bis 3, gekennzeichnet durch Anordnung des Gewichtsstücks (4) zwischen den Kugellagern (17).

5. Körper nach einem der Ansprüche 1 bis 4, gekennzeichnet durch ein Schutzfilter (19) als Abschluß der zum Laser hin gewandten Stirnwand des Körpergehäuses (1).

6. Körper nach einem der Ansprüche 1 bis 5, gekennzeichnet durch eine Öffnung (22) für die Anschlußleitung (21) des Strahllagedetektors (15) und eine Öffnung (23) für den Anschluß einer Positionierstange in der dem Laser abgewandten Stirnwand des Körpergehäuses (1).

### Claims

1. Pull-through device to measure the flexure of the internal wall of a tube using a light source and an electro-optical detector, the device comprising a housing which is centrally located in the interior of a tube and which is displaceable in the longitudinal direction thereof, and having a measuring means with guide rings so as to be slidable along the internal wall of the tube in the axial direction, characterised by the following features :

a) the guide rings (8) are interchangeable ;

b) a receiving housing (2) for the measuring device comprises an offset cylindrical tube which in the offset narrower part is rotatably mounted in the housing (1) of the device by external ball bearings (17), the remaining part accommodating a measuring means comprising an electro-optical detector as a beam position detector (15) ;

c) the beam position detector (15) being mounted in the remaining part of the housing (2) in such a way that the active surface forming the measuring plane is situated in a plane passing through the centre of the guide ring (8) on that side of the housing (1) of the device which is remote from a laser forming a light source ;

d) a weight (4) eccentrically pivotably connected with the narrower part of the housing (2) and with a pivoting range limited by stops on the internal wall of the housing (1).

2. Device in accordance with Claim 1, characterised by the fact that the ball bearings (17) are spaced apart by a tube (3) and are secured, on the one hand to the internal wall of the housing (1) by means of a retaining ring (6) with an external screw threading, and on the other hand to the outer wall of the housing (2) by means of an annular nut (18) provided with an internal screw threading.

3. Device in accordance with Claim 1 or 2, characterised by the fact that the beam position detector (15) is secured in an internal tube (7) insertable into the housing (2) with an insulating disc (14) and an insulating ring (13).

4. Device in accordance with Claims 1 to 3, characterised by the fact that the weight (4) is positioned between the ball bearings (17).

5. Device in accordance with Claims 1 to 4, characterised by a protective filter (19) forming the termination end wall of the housing (1) which faces towards the laser.

6. Device in accordance with Claims 1 to 5, characterised by an aperture (22) for the connection lead (21) of the beam position detector (15) and an aperture (23) for the connection of a locating bar in that end wall of the housing body (1) which faces away from the laser.

## Revendications

1. Corps coulissant, constitué d'un boîtier de corps centré dans un tube et pouvant coulisser dans la longueur de ce tube, ce boîtier étant guidé contre la paroi interne du tube par des bagues d'adaptation lui permettant de glisser axialement et étant équipé d'un moyen de mesure pour mesurer la courbure de la paroi interne du tube à l'aide d'une source de lumière et d'un détecteur électro-optique, caractérisé en ce que :

a) les bagues (8) d'adaptation sont interchangeables ;

b) un boîtier (2) de réception pour le moyen de mesure est un tube cylindrique en gradin, qui est, dans sa partie plus étroite décalée, monté de manière à pouvoir tourner dans le boîtier (1) du corps au moyen de paliers à billes (17) l'entourant, espacés l'un de l'autre, ce boîtier (2) recevant dans son autre partie en tant que moyen de mesure le détecteur électro-optique sous la forme d'un détecteur (15) de position de rayon ;

c) le détecteur (15) de position de rayon est disposé dans l'autre partie du boîtier (2) de réception, de telle manière que sa surface active constituant le plan de mesure se trouve dans le plan passant par le milieu de la bague (8) d'adaptation située sur le côté du boîtier (1) du corps situé à l'opposé d'un laser utilisé comme source de lumière ;

d) un lest (4) est relié, en position excentrée, à la partie plus étroite du boîtier (2) de réception, l'amplitude d'oscillation de ce lest étant limitée par des butées sur la paroi interne du boîtier (1) du corps.

2. Corps selon la revendication 1, caractérisé en ce que les paliers à billes (17) sont maintenus écartés l'un de l'autre par une bague-entretoise (3) et sont fixés d'une part, au moyen d'une bague (6) à filetage externe, à la paroi interne du boîtier (1) du corps et d'autre part, au moyen d'une bague écrou (18) filetée intérieurement, à la paroi externe du boîtier (2) de réception.

3. Corps selon la revendication 1 ou 2, caractérisé en ce que le détecteur (15) de position de rayon est maintenu dans un tube intérieur (7) s'insérant dans le boîtier (2) de réception par une rondelle isolante (14) et une bague isolante (13).

4. Corps selon une des revendications 1 à 3, caractérisé en ce que le lest (4) est disposé entre les paliers à billes (17).

5. Corps selon une des revendications 1 à 4, caractérisé en ce qu'un filtre protecteur (19) obture l'ouverture de la paroi frontale du boîtier (1) du corps, dirigée vers le laser.

6. Corps selon une des revendications 1 à 5, caractérisé par une ouverture (22) pour les fils (21) de liaison du détecteur (15) de position de rayon et par une ouverture (23) pour le raccordement d'une perche de positionnement dans la paroi frontale du boîtier (1) du corps, opposée au laser.

FIG. 1

FIG. 2

FIG. 3